# EUROPÄISCHE PATENTANMELDUNG

(11) **EP 0 587 054 A2**
(43) Veröffentlichungstag der Anmeldung: **16.03.1994**
(21) Anmeldenummer: 93114111.3
(22) Anmeldetag: 03.09.1993
(51) Int. Cl.: G01L 1/02, G01L 9/00, G01L 11/00

(54) **Vorrichtung zum Messen von Drücken**

(30) Priorität: 08.09.1992 DE 4229792
(71) Anmelder: GLÖTZL GESELLSCHAFT FÜR BAUMESSTECHNIK mbH, D-76287 Rheinstetten (DE)
(72) Erfinder: Glötzl, Franz, D-76287 Rheinstetten (DE); Glötzl, Rainer, D-76275 Ettlingen (DE); Voet, Marc, D-76228 Karlsruhe (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Es wird eine einfach herzustellende, damit preiswerte, dennoch aber zuverlässige Vorrichtung zum Messen von Drücken vorgeschlagen, die dadurch ausgestaltet ist, daß durch das Druckkissen mindestens ein drucksensitiver Lichtleiter geführt ist.

## Beschreibung

Die Erfindung betrifft eine Vorrichtung zum Messen von Drücken, wie Druckspannungen in Beton oder dergleichen, mit einem Druckkissen.

Eine solche Vorrichtung dient beispielsweise zur Übervachung der Betonspannungen bei Ortbetonbauten, wie im Tunnelbau (Spritzbetonbauweise), wo es unter anderem darum geht, an der Ortsbrust den in den ersten Stunden und Tagen stattfindenden Spannungsaufbau bzw. die auftretenden Umlagerungen festzustellen.

Gattungsgemäße Vorrichtungen mit Druckkissen als drucksensitiven Teilen sind bekannt. Die Druckkissen werden im Beton eingelagert. Sie sind mit Hydraulikflüssigkeit oder Quecksilber gefüllt und ihr Inneres steht in einer Ausgestaltung über eine Verbindungsleitung mit einem durchsichtigen Meßgefäß in Verbindung, in dem durch den Stand der Meßflüssigkeit der Druckzustand am Ort des Druckkissens überwacht werden kann. Bei einer anderen Ausgestaltung ist das Druckkissen über eine Leitung mit einem herkömmlichen Manometer verbunden. Weiterhin wurde schon vorgeschlagen, unmittelbar benachbart dem Kissen einen druckfesten Zylinder vorzusehen, in dem durch einen mit dem Inneren des Kissens in Verbindung stehenden Raum ein drucksensitiver Lichtleiter geführt ist. Geeignet sind hierzu insbesondere hoch doppelbrechende Lichtleiter, bei denen je nach auf den Lichtleiter wirkendem Druck der Polarisationszustand einer nicht entsprechend der Hauptpolarisationsachsen einfallenden Lichtquelle unterschiedlich verändert wird, so daß je nach Druckzustand ein unterschiedliches Ausgangssignal betrachtet werden kann.

Die bekannte Vorrichtung ist schwierig herzustellen, aufwendig, schwierig einzusetzen und es besteht die Gefahr, daß Beschädigungen auftreten. Darüber hinaus können die Messungen ungenau sein, insbesondere wenn Temperatureinflüsse wirksam werden.

Der Erfindung liegt daher die Aufgabe zugrunde, eine gattungsgemäße Vorrichtung zu schaffen, die unter Vermeidung der genannten Nachteile einfach aufgebaut, einfach und damit preiswert herzustellen ist und mit zuverlässiger Sicherheit und Genauigkeit den jeweiligen Druckzustand messen läßt, wobei gegebenenfalls eine Temperaturkorrektur möglich sein soll.

Erfindungsgemäß wird die genannte Aufgabe bei einer Vorrichtung der eingangs genannten Art dadurch gelöst, daß durch das Druckkissen mindestens ein drucksensitiver Lichtleiter geführt ist.

Durch die erfindungsgemäße Lösung, den Lichtleiter direkt im Druckkissen selbst anzuordnen bzw. durch dieses zu führen, wird der aus dem Stand der Technik bekannte zusätzliche Zylinder vermieden; es werden damit weniger und vor allem weniger aufwendige und weniger teure Teile eingesetzt. Der gesamte konstruktive Aufbau und die Herstellung der erfindungsgemäßen Vorrichtung wird wesentlich einfacher als dies bei der bekannten Ausgestaltung der Fall ist. Damit der Lichtleiter keinen Beeinträchtigungen insbesondere an den Einführstellen in das Kissen hinein und den Stellen, an denen er aus dem Kissen herausgeführt wird, ausgesetzt wird, sieht eine bevorzugte Ausgestaltung vor, daS der Lichtleiter innerhalb eines Schutzrohres durch das Kissen geführt ist, wobei das Schutzrohr innerhalb des Kissens mit Öffnungen versehen ist. Durch die Anordnung des drucksensitiven Lichtleiterteils direkt im Druckkissen ergibt sich darüber hinaus die Möglichkeit einer Temperaturkorrektur oder -kompensation durch die druckgeschützte Hindurchführung eines weiteren Lichtleiters durch das Kissen, so daß dieser keinerlei Druckänderungen ausgesetzt ist. Dies erfolgt in bevorzugter Ausgestaltung dadurch, daß ein weiterer durch das Kissen geführter, aber gegen den Innendruck des Kissens geschützter Lichtleiter vorgesehen ist.

Da der Druckmeßbereich eines derartigen drucksensitiven Lichtleiters von seiner Länge abhängt, kann in weiterer Ausgestaltung vorgesehen sein, daß zwei oder mehr drucksensitive Lichtleiter durch das Kissen hindurchgeführt sind, wobei sie jeweils mit unterschiedlicher wirksamer Länge dem Innendruck des Kissens ausgesetzt sind. Gemäß einer weiteren Ausgestaltung ist vorgesehen, daß die Lichtleiter druckdicht in das Kissen ein- und herausgeführt sind und daß der Lichtleiter beidseits seines wirksamen Bereiches im Schutzrohr eingeklebt ist. Ein druckdichtes Ein- und Herausführen des Lichtleiters erfolgt in bevorzugter Ausgestaltung derart, daß seitlich des Kissens ein erstes Hülsenteil eingeschweißt ist, welches Ringdichtungen aufweist, durch welche das Schutzrohr geführt ist, und daß eine zweite Hülse unter axialer Pressung der Dichtringe auf die erste Hülse aufgeschraubt ist.

Wie schon eingangs ausgeführt, hat sich als drucksensitiver Lichtleiter insbesondere ein doppelbrechender Lichtleiter, vorzugsweise ein hoch doppelbrechender Lichtleiter als geeignet herausgestellt. In bevorzugter Ausgestaltung kann dabei weiter vorgesehen sein, daß der drucksensitive Lichtleiterteil innerhalb des Kissens an seinen Stirnseiten mit zu- und fortführenden Lichtleitern verbunden ist, wobei die zu- und fortführenden Lichtleiter zwar ebenfalls hoch doppelbrechend, aber gegebenenfalls auch herkömmliche Single-Mode-Lichtleiter/Hibi oder niedrig doppelbrechende Leiter sein können. Gemäß bevorzugter Ausgestaltung der erfindungsgemäßen Vorrichtung ist weiterhin vorgesehen, daß der drucksensitive Lichtleiter von einer polarisierten Lichtquelle mit Licht beaufschlagt wird sowie daß ausgangsseitig ein Polarisationsfilter als Analysator vor einer Empfangsoptik angeordnet ist. Da bei einem doppelbrechenden Lichtleiter aufgrund der Druckveränderungen der Polarisationszustand eingestrahlten Lichts in unterschiedlicher Weise verändert wird, kann durch das am Ausgang befindliche Polarisationsfilter je nach Druckzustand ein Ausgangssignal mit unterschiedlicher Intensität beobachtet werden, das sich insbesondere sinusförmig ändert.

Weitere Vorteile und Merkmale der Erfindung ergeben sich aus den Ansprüchen und aus der nachfolgenden Beschreibung, in der ein Ausführungsbeispiel unter Bezugnahme auf die Zeichnung im einzelnen erläutert ist. Dabei zeigt:

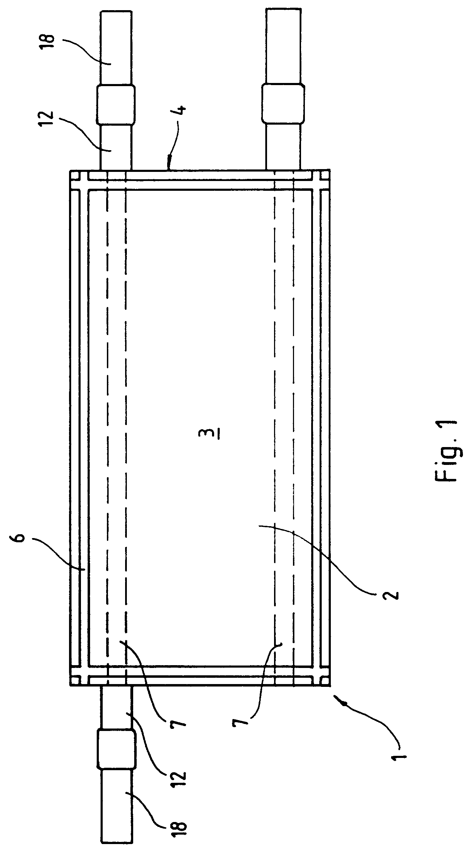

- Figur 1: eine schematische Gesamtdarstellung einer bevorzugten Ausgestaltung der erfindungsgemäßen Vorrichtung;

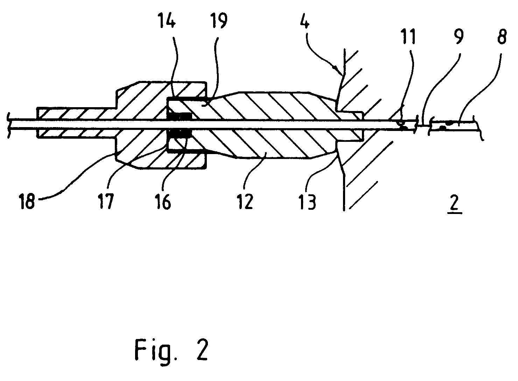

- Figur 2: die druckdichte Einführung der Glasfaser in das Druckkissen.

Die erfindungsgemäße Vorrichtung 1 weist ein Druckkissen 2 auf, wie es an sich aus der DE-A-29 04 844 bekannt ist. Das Druckkissen 2 weist zwei übereinanderliegende Stahlbleche 3 auf, die umfangsseitig durch eine Schweißnaht 4 dicht verbunden sind. Nahe dem Umfang können auf der Außenseite der Stahlplatten 3 Ringnuten 6 ausgebildet sein, die als eine Art Gelenk wirken, mit der Folge, daß sich die Stahlplatten 3 unter Belastung aufeinander zu bewegen.

Die Stahlplatten weisen weiterhin konvex nach außen, d.h. konkav nach innen gewölbte Längsnuten 7 auf, die Raum zur Durchführung eines kapillarartigen Stahlrohres 8 schaffen. Durch das Stahlrohr 8 sind Lichtleiter 9 geführt, die zumindestens im Inneren des Kissens 3 aus hoch doppelbrechendem Material bestehen. Das an sich druckfeste Stahlrohr 8 weist im Inneren des Kissens 2 Radialbohrungen 11 auf, durch welche der im Inneren des Kissens 2 wirkende Druck auch in das Innere des Stahlrohrs 8 eindringen und derart auf die Kapillare 9 wirken kann. Im Bereich des Austritts der Kapillare 9 aus dem Druckkissen 2 ist sie innerhalb des Stahlrohres in diesem fest und druckdicht eingeklebt, beispielsweise mittels eines Zweikomponentenklebstoffes. Das im Inneren des Kissens 2 befindliche Lichtleiterteil 9 ist an seinen beiden Stirnseiten vorzugsweise mit einem andersartigen Lichtleiter verbunden, wie verschweißt, beispielsweise mit einem nicht oder nur niedrig doppelbrechenden Lichtleiter und zwar mit zueinander angular versetzten Polarisationsachsen der einzelnen Lichtleiterteile.

Das Stahlrohr 8 ist in der folgenden Weise druckdicht in das Kissen 2 hinein- und aus diesem wieder herausgeführt: An einer Stirnseite des Kissens 2 ist seitlich ein erstes Hülsenteil 12 im Kissen 2 eingeschweißt (bei 13). Das Hülsenteil 12 weist an seinem dem Kissen 2 abgewandten Ende ein Außengewinde 14 auf. Weiterhin ist an diesem Ende eine Vertiefung 16 vorgesehen, in die Ringdichtungen 17 eingesetzt sind. Ein zweites Hülsenteil 18 weist ein Innengewinde 19 auf und ist mit diesem auf das Außengewinde 14 des Teils 12 aufgeschraubt, wobei hierbei die Ringdichtungen 17 derart axial gestaucht sind, daß sie radial sich dicht zwischen dem Rohrteil 8 und der Mantelwandung der Vertiefung 18 anlegen, so daß ein dichter Abschluß gebildet wird.

Die weitere Nut 7 kann zur Aufnahme eines weiteren Stahlrohrs 8 mit Bohrungen 11 dienen, indem ein Lichtleiter mit kürzerer wirksamer Länge angeordnet ist, wodurch andere Druckbereiche überwacht werden können.

Darüber hinaus kann auch hier ein Stahlrohr mit Lichtleiter eingesetzt sein, ohne daS das Stahlrohr Bohrungen aufweist. Derart ist der Lichtleiter nicht dem im Inneren des Kissens 2 herrschenden Druck ausgesetzt. Da aber die Temperatur ebenfalls auf das optische Verhalten des Lichtleiters 9 einwirkt, kann hierdurch eine Temperaturkorrektur oder -kompensation der mittels des Lichtleiters 9 vorgenommenen Druckmessung bewirkt werden.

Im übrigen ist grundsätzlich in der beschriebenen Weise der Einsatz mehrerer Lichtleiter mit verschiedenen effektiven Längen nebeneinander möglich, um so einen großen Druckbereich überwachen zu können.

## Patentansprüche

1. Vorrichtung zum Messen von Drücken, wie Druckspannungen in Beton oder dergleichen, mit einem Druckkissen, dadurch gekennzeichnet, daß durch das Druckkissen (2) mindestens ein drucksensitiver Lichtleiter (9) geführt ist.

2. Vorrichtung nach Anspruch 1, dadurch gekennzeichnet, daß der Lichtleiter (9) innerhalb eines Schutzrohres (8) durch das Kissen (2) geführt ist, wobei das Schutzrohr (8) innerhalb des Kissens (2) mit Öffnungen (11) versehen ist.

3. Vorrichtung nach Anspruch 1 oder 2, gekennzeichnet durch einen weiteren durch das Kissen (2) geführten, aber gegen den Innendruck des Kissens (2) geschützten Lichtleiter.

4. Vorrichtung nach einem der vorangehenden Ansprüche, dadurch gekennzeichnet, daß die Lichtleiter druckdicht in das Kissen (2) ein- und herausgeführt sind.

5. Vorrichtung nach Anspruch 2, dadurch gekennzeichnet, daß der Lichtleiter (9) beidseits seines wirksamen Bereiches im Schutzrohr (8) eingeklebt ist.

6. Vorrichtung nach einem der Ansprüche 2 bis 5, dadurch gekennzeichnet, daß seitlich des Kissens (2) ein erstes Hülsenteil (12) eingeschweißt ist, welches Ringdichtungen (17) aufweist, durch welche das Schutzrohr (8) geführt ist, und daß eine zweite Hülse (18) unter axialer Pressung der Dichtringe auf die erste Hülse (12) aufgeschraubt ist.

7. Vorrichtung nach einem der vorangehenden Ansprüche, dadurch gekennzeichnet, daß der drucksensitive Lichtleiter (9) ein doppelbrechender Lichtleiter ist.

8. Vorrichtung nach einem der vorangehenden Ansprüche, dadurch gekennzeichnet, daß der drucksensitive Lichtleiterteil (9) innerhalb des Kissens (2) an seinen Stirnseiten mit zu- und fortführenden Lichtleitern verbunden ist.

9. Vorrichtung nach einem der vorangehenden Ansprüche, dadurch gekennzeichnet, daß der drucksensitive Lichtleiter (9) von einer polarisierten Lichtquelle mit Licht beaufschlagt wird.

10. Vorrichtung nach einem der vorangehenden Ansprüche, dadurch gekennzeichnet, daS ausgangsseitig ein Polarisationsfilter als Analysator vor einer Empfangsoptik angeordnet ist.
